Europäisches Patentamt

European Patent Office

Office européen des brevets

(11) Veröffentlichungsnummer: **0 241 880**
**B1**

(12) **EUROPÄISCHE PATENTSCHRIFT**

(45) Veröffentlichungstag der Patentschrift: **11.04.90**

(51) Int. Cl.⁵: **F 16 K 31/40**

(21) Anmeldenummer: **87105351.8**

(22) Anmeldetag: **10.04.87**

(54) **Steuerventil mit einem Druckausgleichsstift und einem die Verbindung zwischen einem Einlass und einem Auslass steuernden Hauptventilteil.**

(30) Priorität: **14.04.86 US 853312**

(43) Veröffentlichungstag der Anmeldung:
**21.10.87 Patentblatt 87/43**

(45) Bekanntmachung des Hinweises auf die
Patenterteilung:
**11.04.90 Patentblatt 90/15**

(84) Benannte Vertragsstaaten:
**AT BE CH DE ES FR GB IT LI NL SE**

(56) Entgegenhaltungen:
**DE-A-3 234 987**
**DE-B-1 262 709**
**US-A-3 033 228**

(73) Patentinhaber: **DEERE & COMPANY**
**1 John Deere Road**
**Moline, Illinois 61265 (US)**

(72) Erfinder: **Kramer, Kenneth Dee**
**1162 Rachael**
**Waterloo Iowa 50701 (US)**
Erfinder: **Olson, Rohn Lee**
**5016 Winder Court No. A**
**North Richland Hills Texas 76118 (US)**

(74) Vertreter: **Feldmann, Bernhard**
**DEERE & COMPANY European Office, Patent**
**Department Steubenstrasse 36-42 Postfach 503**
**D-6800 Mannheim 1 (DE)**

Courier Press, Leamington Spa, England.

EP 0 241 880 B1

**Beschreibung**

Die Erfindung bezieht sich auf ein Steuerventil mit einem in einem Gehäuse verschiebbaren, die Verbindung zwischen einem Einlaß und einem Auslaß über den Pilotdruck in einen Pilotraum steuernden Hauptventilteil, das eine zum Pilotraum offene und dort über einen zweiten Ventilteil verschließbare mit dem Auslaß verbundene Bohrung aufweist.

Bei dem Steuerventil, von dem die Erfindung ausgeht (US—A—3 893 471), findet ein elektromagnetisch gesteuertes Kegelventil Verwendung, da diese Ventile weniger anfällig auf Verschmutzung sind und in zunehmendem Maße heute für eine Präzisionssteuerung Verwendung finden. Hierzu sind derartige Ventile mit einem Ausgleichskolben versehen, der den zweiten Ventilteil hydrodynamisch ausgleicht, so daß die einzigen auf ihn wirkenden Kräfte, die einer Feder und die der Magnetspule sind, wodurch das Ventil unempfindlich gegenüber Lastschwankungen wird. Bei dem bekannten Steuerventil jedoch ist der Ausgleichskolben teilweise in dem weiteren Ventilteil angeordnet, das eine Längsbohrung aufweist, damit die Druckschwankungen der Last von dem Ausgleichskolben aufgefangen werden können. Da der Ausgleichskolben in das obere Ende des weiteren Ventilteils eingesetzt ist, das zusätzlich von dem Pilotdruck beaufschlagt wird, entsteht somit ein Leckölweg aus dem Pilotraum zu dem Verbraucher, den ein Kriechen des Verbrauchers bewirken kann, wenn der weitere Ventilteil auf seinem Sitz fest aufsitzt. Eine derartige Wirkung ist natürlich im Einsatz vollkommen unerwünscht.

Die mit der Erfindung zu lösende Aufgabe wird darin gesehen, bei derartigen Ventilen ein Kriechen der Last auszuschalten, wobei das Ventil im Ganzen gesehen einfach aufzubauen ist. Diese Aufgabe ist nach der Erfindung dadurch gelöst worden, daß ein Druckausgleichsstift in der Bohrung angeordnet ist, dahl der Druck am Auslaß auf ein Ende des Druckausgleichsstifts und der Druck stromaufwärts des zweiten Ventilteils über ein Diaphragma auf das andere Ende des Druckausgleichsstifts wirkt. Auf diese Weise kann der weitere Ventilteil als Vollkörper ausgebildet werden, so daß in diesem Bereich auch keine Leckverluste, die zu einem Kriechen der Last führen könnten, auftreten. Im einzelnen wird dabei der Einlaßdruck über das Diaphragma auf den Druckausgleichsstift übertragen, so daß Leckflüssigkeitsfluß vom Einlaß zum Auslaß an dem Druckausgleichsstift vorbei mit Sicherheit ausgeschlossen ist. Diese Anordnung trägt auch dazu bei, daß eine hydrodynamische Balance für den weiteren Ventilteil gegeben ist, so daß der weitere Ventilteil leicht, aber dennoch abdichtend auf seinem Ventilsitz aufsitzt.

Zweckmäßig ist dabei der Druckausgleichsstift in der Bohrung verschiebbar angeordnet und gegen den zweiten Ventilteil zur Anlage bringbar. Auf diese Weise kann er bei auftretenden Druckstößen, die von der Last herrühren, als Puffer wirken, ohne daß der weitere Ventilteil geöffnet wird. Erfindungsgemäß wird hierzu eine derartige Anordnung des Druckausgleichsstifts in der Bohrung vorgeschlagen, daß sein eines Ende von dem Druck stromabwärts des zweiten Ventilteils und sein anderes Ende von dem Druck stromaufwärts des zweiten Ventilteils bei die Bohrung verschließendem zweiten Ventilteil beaufschlagbar ist, so daß auf das eine Ende des Druckausgleichsstifts der Einlaßdruck und auf das andere Ende des Druckausgleichsstifts der von der Last herrührende Druck einwirken.

Bei einem Steuerventil, bei dem der Pilotraum über eine erste Bohrung mit dem Einlaß verbunden ist, kann nach der Erfindung ferner vorgesehen werden, daß die den Druckausgleichsstift aufnehmende Bohrung einen mit der ersten Bohrung verbundenen Abschnitt aufweist, in dem der Druckausgleichsstift verschiebbar angeordnet ist. Auf diese Weise wird der Druck in der den Pilotraum mit dem Einlaß verbindenden Bohrung auf das eine Ende des Druckausgleichsstifts wirken, da dieser Druck stromaufwärts des weiteren Ventilteils herrscht. Dieser Druck soll über das Diaphragma auf das eine Ende des Druckausgleichsstifts wirken, weshalb nach der Erfindung ferner vorgeschlagen wird, daß das Diaphragma in der ersten Bohrung vor der Mündung des Abschnittes mit dem Druckausgleichsstift vorgesehen ist.

Bei dem bekannten Ventil ist der Pilotraum mit dem Einlaß über eine Zumeßöffnung, d.h. eine Drosselbohrung verbunden, die sich aufgrund ihres kleinen Querschnittes leicht mit Fremdkörpern zusetzen kann, so daß es zu Verstopfungen kommen kann. Um diese Wirkungen auszuschalten, sieht die Erfindung vor, daß zwischen Einlaß und Zumeßöffnung eine längliche Flüssigkeitsöffnung vorgesehen ist, deren Breite kleiner ist als die Zumeßöffnung. Damit werden mögliche Fremdkörper von dieser länglichen Flüssigkeitsöffnung bereits aufgefangen, und im Falle, daß sie sich in dieser Flüssigkeitsöffnung festsetzen, ist der Flüssigkeitsdurchtritt aufgrund ihrer länglichen zweckmäßig ringförmigen Form groß genug, um ausreichend viel Flüssigkeit zu der Zumeßöffnung zu führen.

Bei dem bekannten Steuerventil wird der zweite Ventilteil in Form des Kegelventils elektromagnetisch gegen die Wirkung einer Feder und eines Pilotdrucks in seine Offenstellung verstellt, wodurch sich der Druck in dem Pilotraum abbauen kann und der Hauptventilteil gegen die Wirkung einer Feder sich in seine Offenstellung verschiebt. Nach der Erfindung kann dann der Hauptventilteil eine zum Einlaß offene Sackbohrung aufweisen, die über einen Pilotkanal mit dem Pilotraum verbunden ist und in die ein eine Sackbohrung aufweisender Stopfen derart einsetzbar ist, daß er das offene Ende des Hauptventilteils unter Beibehaltung eines offenen Ringspaltes verschließt, wobei stromaufwärts des Ringspaltes die Zumeßöffnung in dem Stopfen vorgesehen ist. Im einzelnen kann dann in das offene Ende der Sackbohrung des Stopfens das Diaphragma derart eingesetzt werden, daß es gegen das geschlossene Ende der Sackbohrung im Hauptventil gepreßt wird und gegen das eine Ende des Druckausgleichsstifts anliegt, dessen eines Ende bei geschlossenem zweiten Ventilteil in das Diaphragma eingedrückt wird und dessen anderes Ende an einem mit einem Ventilkegel des zweiten Ventilteils verbundenen Stift anliegt, wobei an der Anlagestelle von Druckausgleichsstift und Stift ein Kanal von einer zu dem Auslaß führenden Abflachung am Außenmantel des Hauptventilteils in die Bohrung mündet und die Sackbohrung im Stopfen mit dem Pilotkanal im Hauptventilteil verbunden ist. Hierdurch werden in äußerst einfacher Weise Lecköverluste vermieden, da nun der Druckausgleichsstift an seiner Unterseite abgedichtet ist und keine Lecköverluste an dem Druckausgleichsstift vorbei mehr auftreten können, da er nur noch von den von der Last ausgehenden Drücken bzw. deren Flüssigkeit beaufschlagbar ist.

In der Zeichnung ist ein nachfolgend erläutertes Ausführungsbeispiel der Erfindung dargestellt.

Es zeigt:

Fig. 1 das Steuerventil im Schnitt nach der Linie 1—1 in Fig. 2;

Fig. 2 einen Schnitt nach der Linie 2—2 in Fig. 1;

Fig. 3 einen Schnitt nach der Linie 3—3 in Fig. 1 unter der Annahme, daß es sich bei dem Schnitt in Fig. 1 um einen Vertikalschnitt durch die Mitte des Ventils handelt;

Fig. 4 einen Schnitt nach der Linie 4—4 in Fig. 1 unter den gleichen Voraussetzungen wie bei Fig. 3 und

Fig. 5 den in das Diaphragma eingreifenden Druckausgleichsstift.

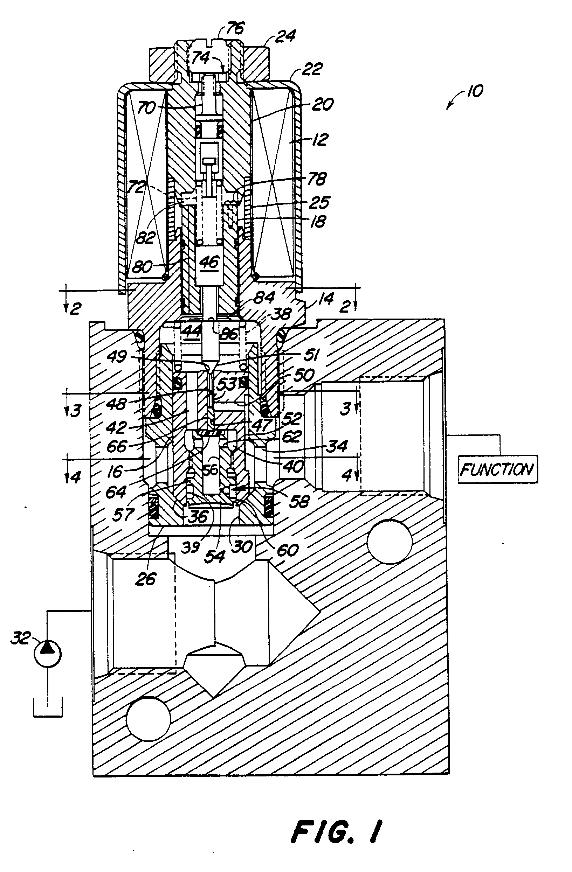

In Fig. 1 der Zeichnung ist ein elektromagnetisch betätigbares Steuerventil 10 dargestellt, das eine Spule 12 und ein hohl ausgebildetes Basisgehäuse 14 aufweist. In letzterem sind ein Kegelventil 16 und ein Magnetkern 18 oder Anker angeordnet. Weitere zum Basisgehäuse gehörende Teile umfassen eine Hohlkappe 20 und einen Deckel 22, der auf der Hohlkappe über eine Mutter 24 gehalten wird, wobei die Hohlkappe 20 durch eine Buchse 25 auf Abstand zu dem Basisgehäuse gehalten wird. In den unteren Teil des Basisgehäuses 14 ist eine Gehäusebuchse 26 eingeschraubt und gegenüber dem Basisgehäuse durch einen O-Ring abgedichtet, so daß die feststehenden Teile des Steuerventils 10 aus Basisgehäuse 14, eingeschraubter Gehäusebuchse 26, der auf dem Basisgehäuse 14 sich abstützanden Buchse 25, der Hohlkappe 20, der die Hohlkappe 20 umgebenden Spule 12 und dem die Spule 12 schützenden Deckel 22 bestehen. Hierbei sind das Basisgehäuse 14, der Magnetkern 18, die Hohlkappe 20 und der Deckel 22 aus eisenmagnetischem Werkstoff und die übrigen Teile aus nicht magnetischem Werkstoff herzustellen.

Die Gehäusebuchse 26 ist mit Bezug auf Fig. 1 nach unten hin offen und bildet dadurch einen Einlaß 30, der mit einer Druckflüssigkeitsquelle, wie einer Pumpe 32 in Verbindung steht. Gleichfalls ist die Peripherie der Gehäusebuchse 26 entsprechend aufgebohrt und bildet damit einen Auslaß 34, der an einem Verbraucher angeschlossen ist. Zwischen Einlaß 30 und Auslaß 34 ist in die Gehäusebuchse 26 ein ringförmig und kegelig ausgebildeter Ventilsitz 36 eingearbeitet.

Das Basisgehäuse 14 mit eingeschraubter Gehäusebuchse 26 ist in einem Ventilblock eingeschraubt und gegenüber diesem entsprechend abgedichtet.

In der Gehäusebuchse 26 ist das Kegelventil 16 verschiebbar angeordnet und so ausgebildet, daß es in seiner einen Endstellung gegen den Ventilsitz 36 dichtend anliegen kann, wodurch eine Flüssigkeitsverbindung zwischen dem Einlaß 30 und dem Auslaß 34 auf- und zusteuerbar ist. Die Steuerung erfolgt durch einen Pilotraum 44 und eine in diesem vorgesehene Feder 38, die sich gegen die Stirnseite des Kegelventils 16 und eine Innenschulter am Basisgehäuse 14 abstützt. Damit der Pilotraum 44 sich mit Druckflüssigkeit auffüllen kann, ist in das Kegelventil 16 eine zum Einlaß 30 hin offene Sackbohrung 39 eingearbeitet, wobei ein Pilotkanal 42 in dem Kegelventil 16 das Sackende der Sackbohrung 39 mit dem Pilotraum 44 verbindet. Der Pilotraum 44 wird durch die Stirnseite des Kegelventils 16, die Unterseite des Magnetkerns 18, den oberen Teil der das Kegelventil 16 aufnehmenden Innenbohrung der Gehäusebuchse 26 und durch den oberen Teil der die Gehäusebuchse 26 aufnehmenden Innenbohrung in dem Basisgehäuse 14 sowie durch ein zweites sich durch den Pilotraum 44 erstreckendes Kegelventil 46 bzw. eine Ventilspindel begrenzt.

Das Kegelventil 46 wiederum ist mit einem Ventilkegel 51 ausgerüstet, von dessen Spitze aus sich ein Stift 53 in eine mittig in das erste Kegelventil 16 eingearbeitete und bis in die Sackbohrung 39 reichende abgesetzte Bohrung 47 erstreckt, die einen Bohrungsteil 48 mit kleinerem Durchmesser aufweist, in dem sich der Stift 53 befindet. Damit ist der Bohrungsteil 48 mit dem kleineren Durchmesser zu dem Pilotraum 44 offen und dort mit einem Ventilsitz 49 ausgerüstet, der durch den Ventilkegel 51 verschließbar ist. In dem Bereich, in dem die Bohrung 47 abgesetzt ist, oder dort, wo der Bohrungsteil 48 mit dem kleineren Durchmesser beginnt, münden in die Bohrung 47 zwei radial in das erste Kegelventil 16 eingearbeitete Kanäle 50, die sich von der Bohrung 47 bis zur Peripherie des Kegelventils 16 erstrecken, das dort entsprechende Abflachungen 52 aufweist. In Fig. 1 sind nur ein Kanal 50 und eine Abflachung 52 dargestellt. Die Abflachungen 52 sind dabei so ausgebildet, daß zwischen der Kanälen 50 und dem Auslaß 34 ein Verbindungsweg für die Druckflüssigkeit entsteht bzw. bei geöffnetem Ventilkegel 51 des 2. Kegelventils 46 ein Verbindungsweg für die Druckflüssigkeit im Pilotraum 44 zum Auslaß 34 oder umgekehrt, wobei darauf hinzuweisen ist, daß der Stift 53 einen noch kleineren Durchmesser als der Bohrungsteil 48 aufweist, so daß zwischen dem sich in dem Bohrungsteil 48 befindlichen Stift 53 und dem Innenmantel des Bohrungsteils 48 ein ringförmiger Freiraum entsteht.

In die Sackbohrung 39 des ersten Kegelventils 16 ist noch ein Stopfen 54 mit einer abgesetzten Sackbohrung 56 eingeschraubt, dessen Sackende dem Einlaß 30 zugelegen ist, so daß sie zum Sackende der Sackbohrung 39 hin offen ist. Hinzu kommt, daß der Stopfen 54 und die Sackbohrung 39 so geformt sind, daß sich am oberen Bereich der Sackbohrung 39 ein Ringraum 40 bildet, in den der Pilotkanal 42 mündet und der über mindestens einen Radialkanal 62 mit der Sakkbohrung 56 in dem Stopfen 54 verbunden ist.

Der Stopfen 54 ist ferner noch mit zwei ringförmigen Stegen 57 und 60 versehen, wobei der Steg 57 zum Einpassen des Stopfens 54 in die Sackbohrung 39 dient und der Steg 60 dem Einlaßende der Sackbohrung 39 zugelegen ist und zu dem Innenmantel der Sackbohrung einen vorherbestimmten Abstand aufweist, so daß sich in diesem Bereich ein ringförmiger Spalt ergibt, durch den Flüssigkeit vom Einlaß 30 über eine radial verlaufende Zumeßöffnung 58 in dem Mantel der Sackbohrung 56 in letztere gelangen kann. Die Zumeßöffnung 58 ist dabei zwischen den beiden Stegen 57 und 60 vorgesehen. Vorzugsweise ist die Breite des ringförmigen Spaltes kleiner als der Durchmesser der Zumeßöffnung, so daß Fremdkörper, die die Zumeßöffnung verstopfen könnten, an dem ringförmigen Spalt abgefangen werden. Da aber die Gesamtdurchtrittsfläche für die Flüssigkeit am ringförmigen Spalt wesentlich größer ist als die Zumeßöffnung 58, können sich auch an den Spalt Fremdkörper festsetzen, ohne daß zu befürchten ist, daß dadurch die Durchflußmenge durch die Zumeßöffnung beeinträchtigt wird. Vorzugsweise ist die Zumeßöffnung 58 derart zu dimensionieren, daß der Pilotdruck im Pilotraum 44 bzw. in dem Ringraum 40 90% des Einlaßdruckes beträgt, wobei der Druck im Pilotraum 44 sich infolge des Verbindungsweges vom Einlaß 30, ringförmigem Spalt, Zumeßöffnung 58, Sackbohrung 56, Radialkanal 62, Ringraum 40 und Pilotkanal 42 aufbauen kann.

Aus Fig. 1 ist schließlich noch zu entnehmen, daß in der Sackbohrung 56, in deren Bereich mit dem größeren Innendurchmesser noch ein flexibles Diaphragma 64 so angeordnet ist, daß es gegen das Sackende der Sackbohrung 39 im ersten Kegelventil 16 gepreßt wird und damit das untere Ende der Bohrung 47 verschließt. Damit wird eine Flüssigkeitsverbindung zwischen der Bohrung 47 und den Sackbohrungen 39, 56 ausgeschlossen.

In dem Bereich der Bohrung 47 mit dem größeren Durchmesser ist noch ein Druckausgleichsstift 66 eingesetzt, der eine derartige Länge aufweist, daß sein eines Ende bis zu dem Diaphragma reicht und dieses teilweise zusammendrückt, während sein anderes Ende bis zur Mündung des Kanals 50 reicht und dort gegen den Stift 53 des zweiten Kegelventils 46 anliegt. Dieses Ende ist auch dem Ausgangsflüssigkeitsdruck ausgesetzt, während auf das andere Ende der Einlaßflüssigkeitsdruck stromabwärts der Zumeßöffnung 58 über das Diaphragma wirkt. Vorzugsweise sind die Durchmesser des Ventilsitzes 49, der Bohrung 47 und des Druckausgleichsstifts 66 derart gewählt, daß der wirksame druckansprechende Bereich der Kombination aus Druckausgleichstift 66 und Diaphragma 64, die dem Steuerdruck ausgesetzt sind, im wesentlichen der netto Effektivfläche des zweiten Kegelventils entspricht, auf die der Steuerdruck wirkt, um das zweite Kegelventil 46 auf seinen Sitz zu drücken. Damit ist das zweite Kegelventil 46 hydrodynamisch ausbalanciert, so daß die einzigen auf das zweite Kegelventil einwirkenden Kräfte die einer Feder 72 und der Spule 12 sind.

Sobald das zweite Kegelventil gegen seinen Ventilsitz 49 fest anliegt, wird keine Leckflüssigkeit von dem Einlaß 30 zu dem Auslaß 34 über den Druckausgleichsstift 66 austreten, da das Diaphragma 64 dichtend gegen die Stirnseite der Sackbohrung 39 anliegt, die die untere Mündung der Bohrung 47 umgibt. Damit verhindern das Diaphragma und der Druckausgleichsstift einen Leckflüssigkeitsverlauf und gewährleisten eine Bewegung in Abhängigkeit von Änderungen beim Differentialdruck. Da der Druckausgleichsstift 66 sich vollständig innerhalb des ersten Kegelventils 16 befindet, kann das zweite Kegelventil 46 als einfacher kompakter Teil ausgebildet sein, wohingegen es beim Stand der Technik hohl ausgebildet werden mußte. In der Hohlkappe 20 ist noch ein Kolben 70 zum Spannen der Feder 72, die auf das zweite Kegelventil 46 wirkt, vorgesehen. Der Kolben 70 ist in der Hohlkappe abgedichtet geführt und kann über Scheiben 74 und eine Feststellmutter 76 gegenüber dem zweiten Kegelventil 46 verstellt werden, wodurch die Feder 72 gespannt oder entspannt wird. Zwischen der Oberseite des Magnetkerns 18 und der Hohlkappe 20 befindet sich noch ein Ringspalt 82, in dem sich der Magnetkern vertikal bewegen kann. Durch eine in den Magnetkern 18 einschraubbare Distanzschraube 78 läßt sich der Verschiebeweg des Magnetkerns begrenzen. Über zwei in den Magnetkern 18 eingearbeitete Längsnuten 80 kann Flüssigkeit aus dem Pilotraum 44 in den Ringspalt 82 gelangen, deren Druck dann auf das zweite Kegelventil 46 einwirkt und den im Pilotraum 44 auf das Kegelventil 46 wirkenden Druck ausgleicht. Schließlich ist das Kegelventil 46 noch mit einem Sprengring 84 versehen, der einerseits gegen die Unterseite des Magnetkerns 18 zur Anlage kommen kann und auf einer Schulter 86 aufliegt. Durch diese Anordnung und das Anschlagen der Distanzschraube 78 an die Hohlkappe 20 wird der maximale Öffnungsweg des zweiten Kegelventils 46 bestimmt.

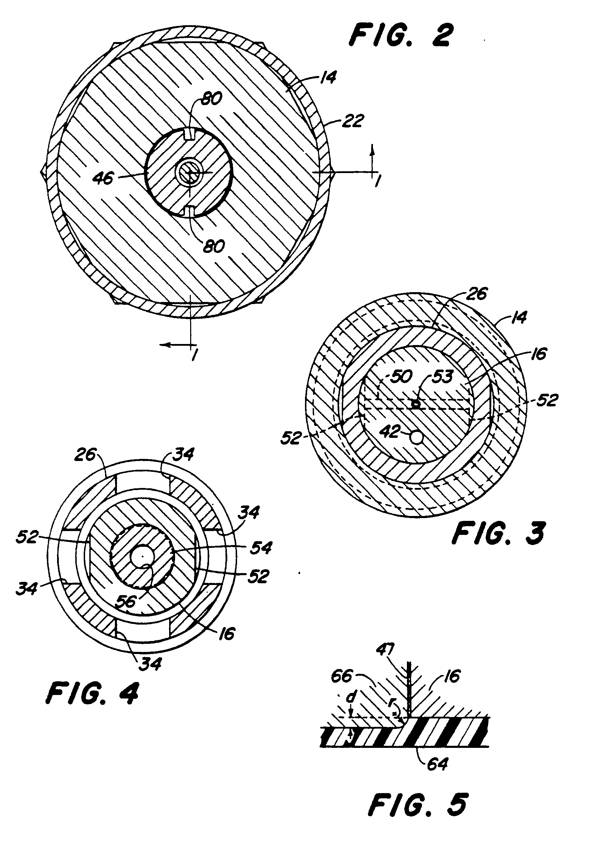

Aus Fig. 5 ist zu entnehmen, daß der Druckausgleichstift 66 um einen Betrag d von vorzugsweise 0,11 mm in das Diaphragma eindringt, wodurch dieses entsprechend eingedrückt wird. Damit nun keine Beschädigung am Diaphragma auftritt, sollte der Druckausgleichsstift 66 allseits abgerundet sein, wobei der Radius etwas größer als der Betrag d, vorzugsweise 0,13 mm, sein kann.

Hinsichtlich der Wirkungsweise ist auf folgendes zu verweisen:

Bei nicht erregter Spule 12 wird sich das erste Kegelventil 16 auf seinem Ventilsitz 36 befinden, so daß eine Verbindung zwischen dem Einlaß 30 und dem Auslaß 34 unterbrochen ist. Dies wird dadurch möglich, daß der Pumpendruck sich über den ringförmigen Spalt, die Zumeßöffnung 58, die Sackbohrung 56, den Ringraum 40, den Pilotkanal 42 bis in den Pilotraum 44 fortpflanzt und das Kegelventil 16 auf seinem Ventilsitz 36 drückt, wobei der Ventilkegel 51 des zweiten Kegelventils 46 den Ventilsitz 49 dichtend verschließt. Das zweite Kegelventil ist in dieser Situation einem Pilotdruck aus dem Pilotraum 44 ausgesetzt, der über die Längsnuten 80 zusammen mit der Feder 72 auf den Kopf des zweiten Kegelventils wirkt. Sobald nun die Spule 12 erregt wird, wird der Magnetkern 18 zusammen mit dem zweiten Kegelventil 46 mit Bezug auf Fig. 1 aufwärts bewegt, wodurch sich der Ventilkegel 51 von dem Ventilsitz 49 abhebt. Dadurch kann die sich in dem Pilotraum 44 befindliche Druckflüssigkeit über die Bohrung 47, den Kanal 50 und die Abflachung 52 in den Auslaß 34 abströmen und das Kegelventil 16 wird über den Einlaßdruck gegen die Wirkung der Feder 38 ebenfalls nach oben bewegt. Hierdurch wiederum wird die direkte Verbindung zwischen Einlaß 30 und Auslaß 34 freigegeben.

Wenn bei auf dem Ventil 49 aufsitzendem Ventilkegel 51 von der Last herrührende Druckstöße in das Steuerventil 10 gelangen sollten, so werden diese von dem Druckausgleichsstift 66 aufgefangen, der sich dann tiefer in das Diaphragma drückt ohne daß sich der Ventilkegel 51 von seinem Ventilsitz 49 abhebt.

Dadurch, daß sich der Druckausgleichsstift 66 vollständig in dem ersten Kegelventil befindet, treten Lecköverluste am Druckausgleichsstift nicht auf, und das Steuerventil läßt sich leicht zusammenbauen, ohne daß Ausrichtprobleme auftreten.

**Patentansprüche**

1. Steuerventil (10) mit einem in einem Gehäuse (Basisgehäuse 14, Gehäusebuchse 26) verschiebbaren, die Verbindung zwischen einem Einlaß (30) und einem Auslaß (34) über den Pilotdruck ın einem Pilotraum (44) steuerndem Hauptventilteil (Kegelventil 16), das eine zum Pilotraum (44) offene und dort über einen zweiten Ventilteil (Kegelventil 46) verschließbare mit dem Auslaß (34) verbundene Bohrung (47) aufweist, dadurch gekennzeichnet, daß ein Druckausgleichsstift (66) in der Bohrung (47) angeordnet ist, daß der Druck am Auslaß (34) auf ein Ende des Druckausgleichsstifts (66) und Druck stromaufwärts des zweiten Ventilteils (Kegelventil 46) über ein Diaphragma (64) auf das andere Ende des Druckausgleichsstifts (66) wirkt.

2. Steuerventil nach Anspruch 1, dadurch gekennzeichnet, daß der Druckausgleichsstift (66) in der Bohrung (47) verschiebbar angeordnet ist und gegen den zweiten Ventilteil (Kegelventil 46) zur Anlage bringbar ist.

3. Steuerventil nach Anspruch 1, gekennzeichnet durch eine derartige Anordnung des Druckausgleichsstifts (66) in der Bohrung (47), daß sein eines Ende von dem Druck stromabwärts des zweiten Ventilteils (Kegelventil 46) und sein anderes Ende von dem Druck stromaufwärts des zweiten Ventilteils (Kegelventil 46) bei die Bohrung (47) verschliessendem zweiten Ventilteil (Kegelventil 46) beaufschlagbar ist.

4. Steuerventil nach einem oder mehreren der vorherigen Ansprüche, wobei der Pilotraum (44) über eine erste Bohrung mit dem Einlaß (30) verbunden ist, dadurch gekennzeichnet, daß die den Druckausgleichsstift (66) aufnehmende Bohrung (47) einen mit der ersten Bohrung verbundenen Abschnitt aufweist, in dem der Druckausgleichsstift (66) verschiebbar angeordnet ist.

5. Steuerventil nach Anspruch 4, dadurch gekennzeichnet, daß das Diaphragma (64) in dem ersten Bohrung vor der Mündung des Abschnittes mit dem Druckausgleichsstift (66) vorgesehen ist.

6. Steuerventil nach einem oder mehreren der vorherigen Ansprüche, wobei die erste Bohrung mit dem Einlaß (30) über eine Zumeßöffnung (58) verbunden ist, dadurch gekennzeichnet, daß zwischen Einlaß (30) und Zumeßöffnung (58) eine längliche Flüssigkeitsöffnung vorgesehen ist, deren Breite kleiner ist als die Zumeßöffnung (58).

7. Steuerventil nach einem oder mehreren der vorherigen Ansprüche, wobei der zweite Ventilteil (Kegelventil 46) elektromagnetisch gegen die Wirkung einer Feder (72) und einen Pilotdruck in seine Offenstellung verstellbar ist, dadurch gekennzeichnet, daß der Hauptventilteil (Kegelventil 16) eine zum Einlaß (30) offene Sackbohrung (39) aufweist, die über einen Pilotkanal (42) mit dem Pilotraum (44) verbunden ist und in die ein eine Sackbohrung (56) aufweisender Stopfen (54) derart einsetzbar ist, daß er das offenen Ende des Hauptventilteils (Kegelventil 16) unter Beibehaltung eines offenen Ringspaltes verschließt, wobei stromabwärts des Ringspaltes die Zumeßöffnung (58) in dem Stopfen (54) vorgesehen ist.

8. Steuerventil nach Anspruch 7, dadurch gekennzeichnet, daß in das offene Ende der Sakkbohrung (56) des Stopfens (54) das Diaphragma (64) derart eingesetzt ist, daß es gegen das geschlossene Ende der Sackbohrung (39) im Hauptventilteil (Kegelventil 16) gepreßt wird und gegen das eine Ende des Druckausgleichsstifts (66) anliegt, dessen eines Ende bei geschlossenem zweiten Ventilteil (Kegelventil 46) in das Diaphragma eingedrückt wird und dessen anderes Ende an einem mit einem Ventilkegel (51) des zweiten Ventilteils verbundenen Stift (53) anliegt, wobei an der Anlagestelle von Druckausgleichsstift (66) und Stift (53) ein Kanal (50) von einer zu dem Auslaß (34) führenden Abflachung (52) am Außenmantel des Hauptventilteils (Kegelventil 16) in die Bohrung (47) mündet und die Sackbohrung (56) mit dem Pilotkanal (42) im Hauptventilteil (Kegelventil 16) verbunden ist.

**Revendications**

1. Clapet-pilote (10) comportant un composant constituant un clapet principal (clapet conique 16) pouvant se déplacer dans un boîtier (boîtier de base 14, boîte 26), commandant la liaison entre une entrée (30) et une sortie (34) par l'intermédiaire de la pression-pilote régnant dans une chambre-pilote (44), qui comporte un conduit (47) ouvert vers la chambre-pilote (44) et pouvant y être fermé au moyen d'un second composant constituant un clapet (clapet conique 46), relié à la sortie (34), caractérisé en ce qu'une tige d'équilibrage de pression (66) est placée dans le conduit (47), en ce que la pression à la sortie (34) agit sur une extrémité de la tige d'égalisation de pression (66) et la pression en amont du second composant constituant un clapet (clapet conique 46) agit, par l'intermédiaire d'un diaphragme (64), sur l'autre extrémité de la tige d'égalisation de pression (66).

2. Clapet-pilote suivant la revendication 1, caractérisé en ce que la tige d'égalisation de pression (66) est disposée de façon à pouvoir se déplacer dans le conduit (47) et peut être amenée au contact du second composant constituant un clapet (clapet conique 46).

3. Clapet-pilote suivant la revendication 1, caractérisé par une disposition de la tige d'égalisation de pression (66) située dans le conduit (47) telle qu'une première extrémité de celle-ci subit l'action de la pression régnant en aval du second composant constituant un clapet (clapet conique 46), et son autre extrémité celle de la pression régnant en amont du second composant constituant un clapet (clapet conique 46) lorsque le second composant constituant un clapet (clapet conique 46) obture le conduit (47).

4. Clapet-pilote suivante une ou plusieurs des revendications précédentes, dans lequel la chambre-pilote (44) est reliée à l'entrée (30) par l'intermédiaire d'un premier conduit, caractérisé en ce que le conduit (47) logeant la tige d'égalisation de pression (66) comporte une section reliée au premier conduit dans laquelle la tige d'égalisation de pression (66) est disposée de façon à pouvoir se déplacer.

5. Clapet-pilote suivant la revendication 4, caractérisé en ce que le diaphragme (64) est prévu dans le premier conduit devant l'embouchure de la section comportant la tige d'égalisation de pression (66).

6. Clapet-pilote suivant une ou plusieurs des revendications précédentes, dans lequel le premier conduit est relié à l'entrée (30) par l'intermédiaire d'une ouverture de dosage (58), caractérisé en ce qu'on prévoit entre l'entrée (30) et l'ouverture de dosage (58) une ouverture hydraulique oblongue dont la largeur est inférieure à l'ouverture de dosage (58).

7. Clapet-pilote suivant une ou plusieurs des revendications précédentes, dans lequel le second composant constitue un clapet (clapet conique 46) pouvant être amené dans sa position d'ouverture électromagnétiquement contre l'action d'un ressort (72) et une pression-pilote, caractérisé en ce que le composant constituant le clapet principal (clapet conique 16) comporte un alésage borgne (39) ouvert vers l'entrée (30), qui est relié par l'intermédiaire d'un canal-pilote (42) à la chambre-pilote (44) et dans lequel un obturateur (54) comportant un alésage borgne (56) peut être introduit de telle façon qu'il obture l'extrémité ouverte du composant constituant le clapet principal (clapet conique 16) en conservant un intervalle annulaire ouvert, l'ouverture de dosage (58) étant prévue en aval de l'intervalle annulaire dans l'obturateur (54).

8. Clapet-pilote suivant la revendication 7, caractérisé en ce que le diaphragme (64) est introduit dans l'extrémité ouverte de l'alésage borgne (56) de l'obturateur (54) de telle façon qu'il est appuyé contre l'extrémité fermée de l'alésage borgne (39) situé dans le composant constituant le clapet principal (clapet conique 16) et est au contact d'une première extrémité de la tige d'égalisation de pression (66) dont une première extrémité est enfoncée dans le diaphragme lorsque le second composant constituant un clapet (clapet conique 46) est fermé en dont l'autre extrémité est en contact avec une tige (53) reliée à un cône de clapet (51) du second composant constituant un clapet, tandis qu'au point de contact de la tige d'égalisation de pression (66) et de la tige (53), un canal (50) ménagé dans un aplatissement (52) aboutissant à la sortie (34) situé sur la périphérie extérieure du composant constituant le clapet principal (clapet conique 16) débouche dans le conduit (47), et que l'alésage borgne (56) est relié au canal-pilote (42) situé dans le composant constituant le clapet principal (clapet conique 16).

**Claims**

1. Control valve (10) with a main valve part (cone valve 16) slidable in a housing (base housing 14, housing bush 26), controlling the connection between an inlet (30) and an outlet (34) through the pilot pressure in a pilot chamber (44), which main valve part comprises a bore (47) connected to the outlet (34), open to the pilot chamber (44) and there closable by a second valve part (cone valve 46), characterized in that a pressure equalising rod (66) is arranged in the bore (47), in that the pressure at the outlet (34) acts on one end of the pressure equalising rod (66) and the pressure upstream of the second valve part (cone valve 46) acts on the other end of the pressure equalising rod (66) through a diaphragm (64).

2. Control valve according to claim 1, characterized in that the pressure equalising rod (66) is slidably arranged in the bore (47) and can be brought into abutment with the second valve part (cone valve 46).

3. Control valve according to claim 1, characterized by such an arrangement of the pressure equalizing rod (66) in the bore (47) that its one end can be acted on by the pressure downstream of the second valve part (cone valve 46) and its other end by the pressure upstream of the second valve part (cone valve 46) with the second valve part (cone valve 46) clsoing the bore (47).

4. Control valve according to one or more of the preceding claims, wherein the pilot chamber (44) is connected to the inlet (30) through a first bore, characterized in that the bore (47) receiving the pressure equalising rod (66) has a section connected to the first bore, in which section the pressure equalising rod (66) is slidably aranged.

5. Control valve according to claim 4, characterized in that the diaphragm (64) is provided in the first bore preceding the mouth of the section with the pressure equalising rod (66).

6. Control valve according to one or more of the preceding claims, wherein the first bore is connected to the inlet (30) through a metering opening (58), characterized in that an elongated fluid opening is provided between inlet (30) and metering opening (58), with a width smaller than the metering opening (58).

7. Control valve according to one or more of the preceding claims, wherein the second valve part (cone valve 46) is adjustable electromagnetically against the action of a spring (72) and a pilot pressure into its open position, characterized in that the main valve part (cone valve 16) has a blind bore (39) open to the inlet (30), which bore is connected to the pilot chamber (44) through a pilot channel (42) and in which a plug (54) with a blind bore (56) is so fitted that it closes the open end of the main valve part (cone valve 16) while maintaining an open annular gap, the metering opening (58) being provided downstream of the annular gap in the plug (54).

8. Control valve according to claim 7, characterized in that the diaphragm (64) is so fitted in the open end of the blind bore (56) of the plug (54) that it is pressed against the closed end of the blind bore (39) in the main valve part (cone valve 16) and bears against the one end of the pressure equalising rod (66), whose one end is pressed into the diaphragm with the second valve part (cone valve 46) closed and whose other end bears on a rod (53) connected to a valve cone (51) of the second valve part, wherein a channel (50) from a flat (52) on the outer periphery of the main valve part (cone valve 16) leading to the outlet (34) opens into the bore (47) and the blind bore (56) is connected to the pilot channel (42) in the main valve part (cone valve 16).

**FIG. 1**

FIG. 2

FIG. 3

FIG. 4

FIG. 5